Europäisches Patentamt

European Patent Office

Office européen des brevets

(19)

(11) Publication number: **0 145 069**
**B1**

(12)
# EUROPEAN PATENT SPECIFICATION

(45) Date of publication of patent specification: **20.01.88**

(51) Int. Cl.⁴: **B 63 B 22/08**

(21) Application number: **84201716.2**

(22) Date of filing: **26.11.84**

(54) Sonobuoy multiple depth deployment apparatus.

(30) Priority: **29.11.83 US 555979**

(43) Date of publication of application:
**19.06.85 Bulletin 85/25**

(45) Publication of the grant of the patent:
**20.01.88 Bulletin 88/03**

(84) Designated Contracting States:
**BE DE FR GB IT NL SE**

(56) References cited:
**US-A-3 262 090**
**US-A-3 991 475**
**US-A-4 029 233**
**US-A-4 096 598**
**US-A-4 464 130**

(73) Proprietor: **Magnavox Government and
Industrial Electronics Company
1313 Production Road
Fort Wayne Indiana 46808 (US)**

(72) Inventor: **Toone, James Rarick
c/o INT. OCTROOIBUREAU B.V. Prof. Holstlaan 6
NL-5656 AA Eindhoven (NL)**
Inventor: **Barker, Robert Leroy
c/o INT. OCTROOIBUREAU B.V. Prof. Holstlaan 6
NL-5656 AA Eindhoven (NL)**

(74) Representative: **Melio, Jan Dirk et al
INTERNATIONAAL OCTROOIBUREAU B.V. Prof.
Holstlaan 6
NL-5656 AA Eindhoven (NL)**

EP 0 145 069 B1

## Description

### Background of the invention
### Field of the invention

This invention relates to sonobuoy deployment apparatus and more particularly to preselected depth deployment of the sonobuoy hydrophone.

### Brief statement of the prior art

Sonobuoys are devices adapted to be dropped by parachute from an aircraft, are equipped with an hydrophone for detecting underwater sound in either an active or passive manner and transducing the sounds to electrical signals and have an automatic radio transmitter for transmitting the signals to air and surface craft. A wound cable packed in the sonobuoy connects the surface transmitter and the underwater hydrophone and is automatically payed out after the sonobuoy enters the water. The cable length determines the underwater depth of the hydrophone. Different cable lengths are desired for different water bottom depths and other conditions.

One manner of obtaining different depths is simply to package a wound cable having a length desired for a particular application. Each sonobuoy thus is restricted to only one hydrophone depth. A sonobuoy capable of multiple hydrophone deployment depths substantially increases the sonobuoy versatility and reduces sonobuoy logistic requirements and this invention is directed towards this purpose. Sonobuoys comprising variable depth deployment means according to the first part of claim 1 are described in US—A—3,262,090 and US—A—3,991,475. The means used in these known sonobuoys are of a rather complicated nature. An object of the invention is to provide a sonobuoy with variable depth deployment means of a more simple construction.

### Summary of the invention

The deployment apparatus of the present invention is defined by the features of claim 1.

A sonobuoy float canister is releasably latched to a cylindrical wound cable pack container. The cable is attached at one end to the float and at the other end to a lower sonobuoy component. The cable is provided with a looped end lanyard attached to the cable at a predetermined point intermediate of the cable length corresponding to a predetermined intermediate depth of the underwater component. The looped end of the lanyard extends above the wound cable and is releasably captured as later explained.

A bidirectionally rotatable cam or wedge-shaped rotor is mounted to the bottom end of the float canister and pivotally carries at its narrow end a rod end. The rod extends across the canister bottom and its other end is movable into and out of latched contact with the underside of a first lip inwardly extending from the inner surface of the cable pack container. The wide end of the rotor is movable into and out of latched contact with the underside of a second lip inwardly extending from the inner surface of the cable pack container at a point diametrically opposite the first lip. The rod end and rotor wide end are latched and unlatched substantially simultaneously.

A "P" shaped wire has its shank rotatably mounted at two spaced points on a vertical axis in a bracket depending from the second lip on the inside surface of the container and is spring urged upwardly. The wide end of the rotor is notched to receive the head of the P wire and swings the head about the vertical axis as the rotor turns. The second lip has a notch at one side thereof for receiving the head of the P wire and the rotor can swing the head into the lip notch. The shank of the P wire is inserted through the looped end of the lanyard and thus the looped end is captured as long as the wire is in the bracket, between the mounting points.

In the first, or center, rotative position of the rotor, the rod end is latched to the first lip, the rotor is latched to the second lip and the looped end of the lanyard is captured by the shank of the P wire. The canister is thus latched to the container and no payout of the cable is possible and this corresponds to a first or shallow deployment depth of the lower component. In a second rotative position of the rotor, the rotor is rotated away from the lip notch so that the looped end of the lanyard remains captured and the rod end and rotor wide end are unlatched from their respective lips, thus releasing or unlatching the canister from the container. The cable pays out to the point where the lanyard is attached but no further since the looped end of the lanyard is still captured. This corresponds to the medium or intermediate deployment depth. In a third rotative position of the rotor the rotor is rotated towards the lip notch and the head of the P wire is swung into alignment with the lip notch at which point the head of the P wire is spring urged into the notch and against the bottom end of the canister releasing the looped end of the lanyard and continued rotation of the rotor to the third position will also unlatch the canister from the container. The cable is fully payed out since the restraint has been removed and the underwater component is deployed to the full length of the cable.

A bidirectional motor is used to selectively obtain the rotational positions of the rotor. The rotor is actuated through a control circuit which initiates the actuation sequence when a salt water battery is flooded with a sea water electrolyte. To obtain the first rotative position of the rotor the motor is unactuated. To obtain the second rotative position of the rotor the motor is actuated in one rotational direction and to obtain the third rotative position the motor is actuated in the opposite rotational direction.

It is therefore an object of this invention to provide a sonobuoy deployment apparatus having a plurality of selectable hydrophone deployment depths.

Another object of this invention is to provide apparatus of the previous object wherein one deployment depth corresponds to no payout of the deployment cable between the upper and the lower sonobuoy components, a second depth corresponds to partial payout of the cable and a third depth corresponds to full payout of the cable.

It is a further object of this invention to provide apparatus of the previous object utilizing a rotor having a plurality of operating rotative positions, each position corresponding to a different lower component depth.

Another object of this invention is to provide in the apparatus of the previous object latching together of the upper and lower sonobuoy components thus preventing cable payout and are unlatched in a first manner to provide partial cable payout and unlatched in a second manner for full cable payout.

A further object of this invention is to provide in the apparatus of the previous object a looped end lanyard attached to an intermediate point in the cable with the looped end captured in the first manner of unlatching and freed in the second manner of unlatching.

The above mentioned and other features and objects of this invention and the manner of obtaining them will become more apparent and the invention itself will be best understood by reference to the following description of an embodiment of the invention taken in conjunction with the accompanying drawings.

Brief description of the drawings

Fig. 1 is a vertical section, shown diagrammatically, of a sonobuoy utilizing the mechanism of this invention;

Fig. 2 is a perspective view of a sonobuoy of Fig. 1 with the parachute deployed and about to enter the water after being released from an aircraft;

Fig. 3 is a view in perspective of the sonobuoy of Fig. 2 after it has entered the water and the parachute has been ejected;

Fig. 4 is a simplified, partially in perspective and partially broken view of a sonobuoy in a first or shallow depth deployment;

Fig. 5 is a view similar to Fig. 4 of the sonobuoy in a second or medium depth deployment;

Fig. 6 is a view similar to Fig. 4 of the sonobuoy in a third or deep depth deployment;

Fig. 7 is an exploded perspective view of the mechanism of this invention used to obtain the selectable multiple depth deployment;

Fig. 8 is an enlarged exploded perspective partially broken view of the lanyard retention and release mechanism of this invention;

Fig. 9 is an enlarged perspective partially broken view of the mechanism of Fig. 8 mounted to the cable pack container inner surface and showing the looped end of the lanyard in a retained or captured condition;

Fig. 10 is a view similar to Fig. 9 showing the looped end in a released condition;

Fig. 11 is a perspective view of the fully wound cable pack coil showing the lanyard protruding from the upper end and the P shaped wire inserted through the looped end as it is for the first depth deployment;

Fig. 12 is a view similar to Fig. 11 with the cable pack coil partially payed out and restrained from further pay out by the lanyard end retention by the P wire as it is for the second depth deployment;

Fig. 13 is a view similar to Fig. 11 with the lanyard end released and the coil fully payed out as it is for the third depth deployment;

Fig. 14 is a partial, simplified longitudinal section of the float canister latched to the cable pack container;

Fig. 15 is an enlarged section taken at 15—15 of Fig. 14 with the release mechanism rotor shown in a first rotative position corresponding to the first deployment depth;

Fig. 16 is a view similar to Fig. 15 with the release mechanism rotor shown in a second rotative position corresponding to the second deployment depth;

Fig. 17 is a view similar to Fig. 15 with the release mechanism shown in a rotative position wherein the looped end of the lanyard is released;

Fig. 18 is a view similar to Fig. 15 with the release mechanism rotor in a third rotative position corresponding to the third deployment depth;

Fig. 19 is a schematic diagram of the control circuit mounted in the float canister for actuating the rotor motor; and

Fig. 20 is a schematic diagram of a bidirectional motor system for use in this invention.

Description of a preferred embodiment

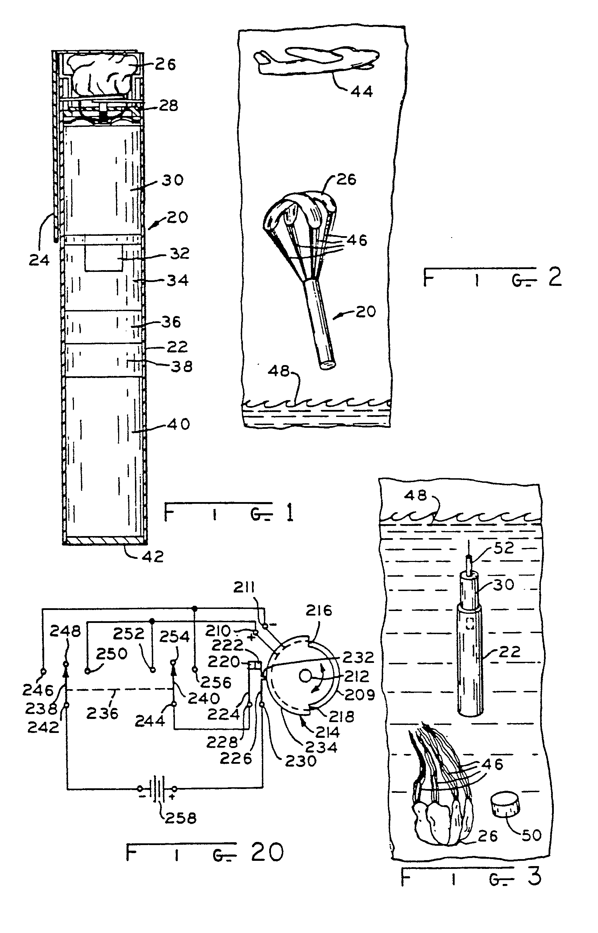

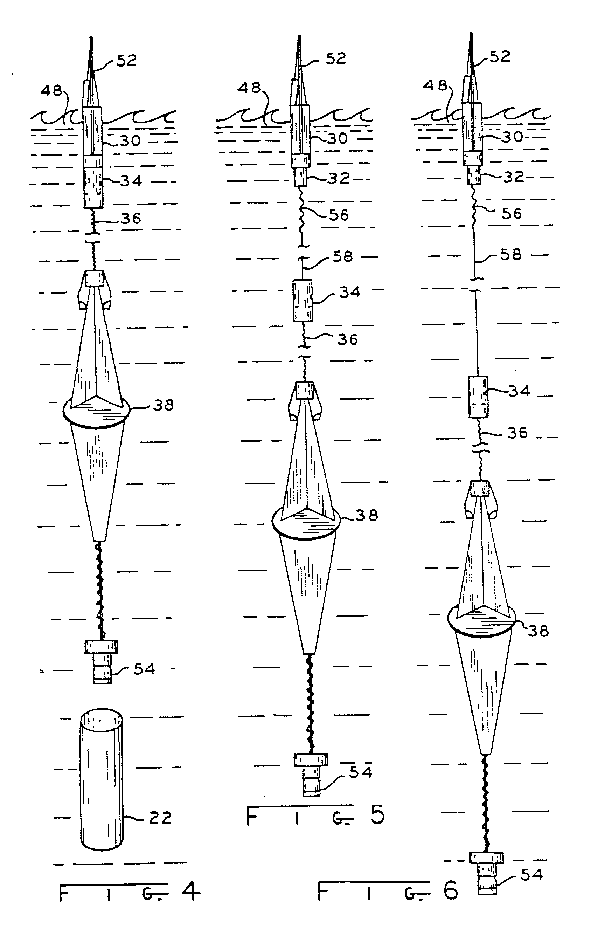

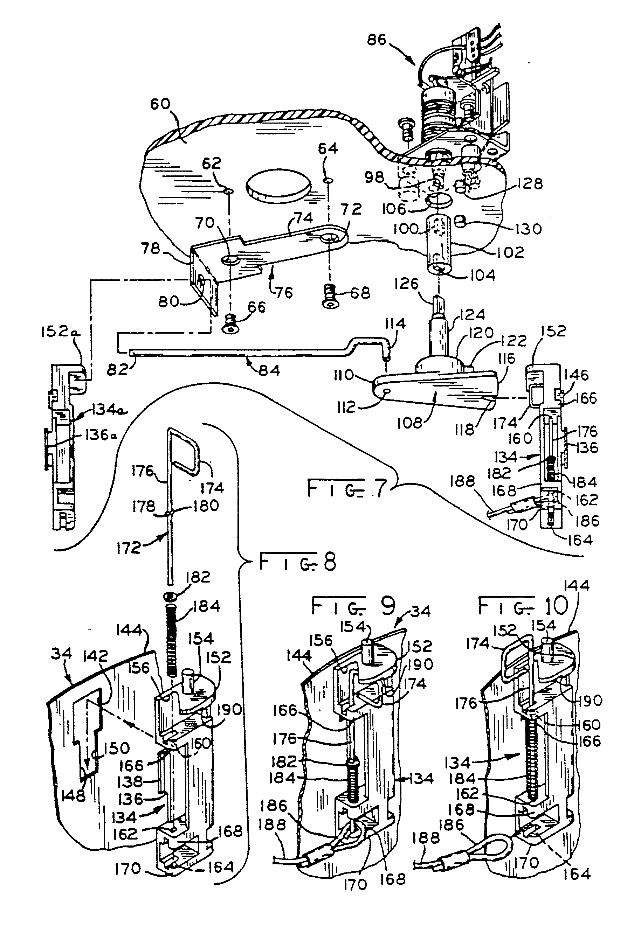

Referring to Figs. 1—6 a sonobuoy 20 prior to deployment has cylindrically tubular outer casing 22, wind blade 24 at the outside upper end thereof and inside thereof in descending order parachute 26, parachute release mechanism shown generally at 28, cylindrical rigid float canister 30, sea water battery 32, upper compliance cable and hard cable pack container 34, electrically conductive lower compliance cable 36, sea anchor 38, lower electronic components and hydrophone container 40 and removable lower end 42. Sonobuoy 20 is dropped from aircraft 44 and blade 24 is wind actuated in conventional manner to deploy parachute 26, having a plurality of shroud lines 46 which are releasably attached inside casing 22, to provide a controlled descent to the surface of water 48.

After casing 22 enters water 48 parachute 26, lines 46 and parachute cup 50 attached to the lower ends of lines 46 are ejected and the buoyancy force of canister 30 causes separation of canister 30 from casing 22. Antenna 52 is automatically extended from canister 30 and extends above the surface of water 48 for transmission of signals from hydrophone 54, which may be active or passive as is known in the art.

Canister 30 is connected to upper end of electrically conductive upper compliance cable 56 the lower end of which is connected to the upper end of electronically conductive hard cable 58 the lower end of which is connected to the upper end of lower compliance cable 36. Cables 56, 36 are relatively short and resilient to reduce vibration and shock while cable 58 is longer and is dimensioned to provide the desired fully deployed or deep depth of hydrophone 54.

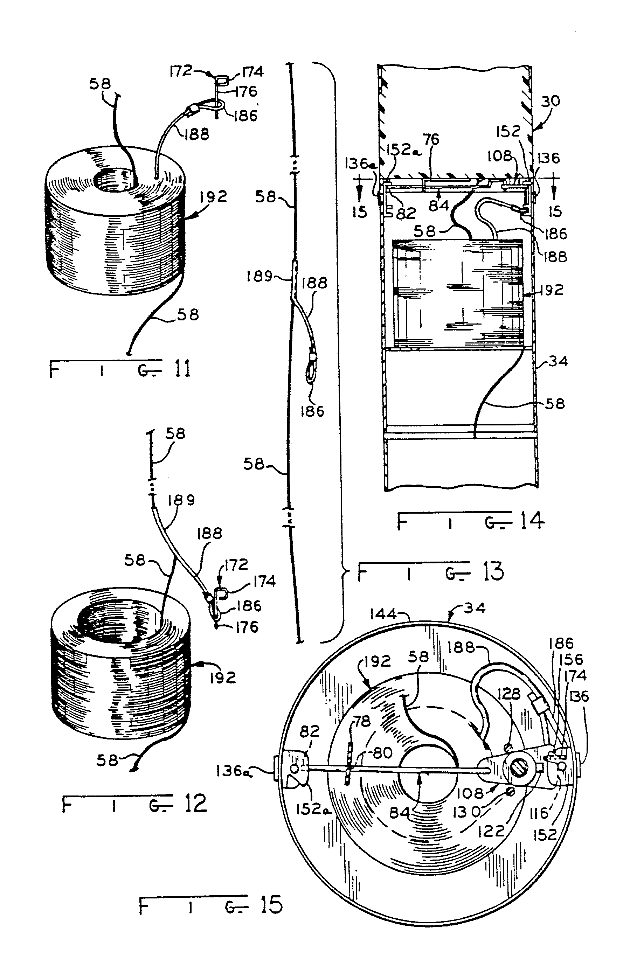

The lower end of cable 36 is connected to the top of anchor 38 the lower end of which is connected to hydrophone 54. In the deployed condition shown in Fig. 4, casing 22 is free of its previous contents and sinks to the bottom which is facilitated by release of end 42.

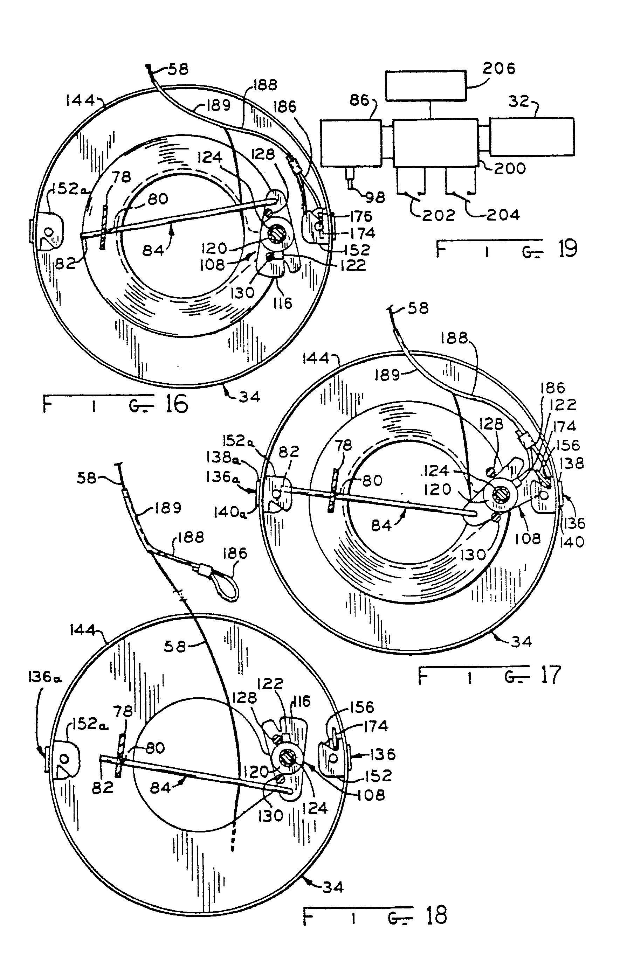

In Fig. 4 hydrophone 54 is deployed to the shallow or first depth, canister 30 being latched to container 34; in Fig. 5 hydrophone 54 is deployed to a medium or second depth, canister 30 being unlatched from container 34 and cable 58 being partially payed out; and in Fig. 6 hydrophone 54 is deployed to a deep or third depth with canister 30 being unlatched from container 34 and cable 58 being fully payed out.

Referring to Fig. 7 the unlatching and release mechanism is shown. Bottom end 60 of canister 30 is provided with holes 62, 64 for receiving rivets 66, 68 respectively which are inserted through holes 70, 72 respectively in horizontal leg 74 of L-shaped rod guide bracket 76. Bracket 76 has depending arm 78 with guide hole 80 for slidingly receiving end 82 of latching rod 84 for guiding movement of rod end 82 beneath lip 152a and maintaining latching pressure between lip 152a and rod end 82. Motor 86 is attached to openings in posts 90, 92 upstanding from the upper surface of bottom 60 with bolts 94, 96. Motor 86 is capable of selectively rotating in either the clockwise or counterclockwise rotative direction through an arc of approximately 135°. Other bidirectional motors of similar function may be used. Motor 86 has depending shaft key 98 which is inserted in upper keyway 100 of cylindrical coupler 102 which has lower keyway 104. Coupler 102 is rotatably mounted in opening 106 in bottom 60.

Wedge shaped rotor 108 has a pointed or narrow end 110 in which is formed opening 112 for receiving, for free rotation therein, down-turned end 114 of rod 84. Wide end 116 of rotor 108 has funnel shaped notch 118 formed therein slightly off center of end 116. Cylindrical base 120 is formed on and upstanding from the upper surface of rotor 108 substantially centrally thereof. A stop finger 122 extends radially outwardly from base 120 towards end 116 substantially midway between the sides of end 116. Cylindrical post 124 is formed on and upstanding from base 120 and key 126 is formed on and upstanding from post 124 and is received in keyway 104. Thusly motor 86 rotatively drives rotor 108 through coupler 102. Stops 128, 130 depend from the lower surface of bottom 60 and are positioned in the swing path of finger 122 as rotor 108 is rotated clockwise and counter clockwise respectively to limit the rotative arc of rotor 108.

Referring to Figs 7—9 elongated vertical slide bracket 134 has extending from the outer side thereof substantially square slide 136 having vertical ears 138, 140 on opposite sides thereof. Slide 136 is insertable into the upper square shaped portion of T-shaped slot 142 in wall 144 of container 34. As slide 136 is moved downwardly in slot 142, slot edges 148, 150 slide along the inner surfaces of ears 138, 140 respectively until horizontal ledge 146 which is vertically spaced above slide 136 clears the upper edge of slot 142 and snaps into the square opening at the top of slot 142 at which point bracket 134 is firmly attached to wall 144.

An inwardly extending lip 152 is formed in bracket 134 and has vertical locator peg 154 upstanding therefrom which is insertable into a locator opening, not shown, in bottom 60. A V-shaped notch 156 is formed at one side of lip 152 adjacent wall 144 and between the first and third rotative positions of rotor 108. Vertically spaced below lip 152 in bracket 134 in vertically spaced alignment are pivot holes 160, 162, 164 in laterally projecting arms 166, 168, 170 respectively. P-shaped wire 172 has square shaped looped head 174, is of a stiff material such as rigid metal wire, and shank 176 depends from head 174. Formed on shank 176 are a pair of spring washer retaining tabs 178, 180. Shank 176 is slidingly inserted downwardly through hole 160, is slidingly inserted through the center opening of downwardly convex shaped washer 182 the upper surface of which abuts and is restrained from further sliding movement on shank 176 by tabs 178, 180 and slidingly inserted through coil spring 184. The end of shank 176 is slidingly inserted through hole 162 compressing spring 184 between washer 182 and arm 168, Fig. 9, and then through loop 186 at the end of lanyard 188 and then into hole 164. Head 174 is turned counterclockwise, as viewed from the top, until it abuts shallow positioning shoulder 190 formed on the underside of lip 152 at which point head 174 is positioned for insertion into notch 118, Fig. 15, and maintaining compression of spring 184.

Diametrically opposite bracket 134 in wall 144 is a similar bracket 134a inserted in a T-shaped slot 142a in wall 144 similar to T slot 142 in a similar manner. Bracket 134a has lip 152a extending inwardly of container 34 in the manner of lip 152. Slide 36a, ears 138a 140a and ledge 146a of bracket 134a are all similarly shaped and function in similar manner to the corresponding parts of bracket 134 to firmly attached bracket 134a to the inner surface of wall 144. As will become apparent bracket 134a is utilized for the purpose of providing inwardly extending lip 152a for latching canister 30 to container 34. Bracket 134a is shaped similarly to bracket 152 for reasons of economy of manufacture.

Referring to Figs. 11—13 cable 58 is wound in a multiple layer coil 192 and when fully wound, Fig. 11, cable portions extend above and below coil 192. Lanyard 188 extends above coil 192 from a point between coil ends. Loop 186 is shown diagrammatically around shank 176 of P wire 172.

As mentioned, coil 192 remains fully wound for the first depth deployment.

In the partially payed out condition of coil 192, Fig. 12, coil 192 is unwound from the inside to the outside until lanyard 188 becomes taut, being restrained from further payout by the restraining force applied to loop 186 by shank 176. This condition of coil 192 corresponds to the second deployment depth. Lanyard 188 in this embodiment is a woven tubular fabric having a portion 189 through which cable 58 is inserted and progressively contracts in diameter and tightens on cable 58 as cable 58 is pulled through portion 189 in a payout direction to firmly attach portion 189 to cable 58. A weave of this kind is well known and is sometimes referred to as a "Chinese finger".

In the fully payed out condition of coil 192, Fig. 13, coil 192 is fully unwound, the restraining force of shank 176 on loop 176 having been removed, as later explained. This condition of coil 192 corresponds to the third deployment depth.

Referring to Figs. 14—18, canister 30 is latched to container 34, Figs. 14, 15, is unlatched from container with loop 186 captured by shank 176, Fig. 16 is latched to container 34 with lanyard loop 186 released by shank 176, Fig. 17, and is unlatched from container 34 after loop 186 has been released from shank 176, Fig. 18.

Rotor 108, is in a first rotative or center position in Figs. 14, 15 wherein rod end 82 is underneath lip 152a and rotor end 116 is under lip 152 latching canister 30 to container 34. Head 174 is in notch 118 and also is under lip 152. In this condition, no cable 58 payout from coil 192 is possible and hydrophone 54 is at the first deployment depth.

In the second rotative position of rotor 108, Fig. 16, rotor 108 has been rotated approximately 90° in the counterclockwise direction, viewed from above, from the first rotative position at which point finger 122 abuts stop 130. End 82 is moved clear of lip 152a and end 116 is moved clear of lip 152 by the rotation of rotor 108. Head 174 has been swung clockwise and shank 176 has been rotated clockwise about the vertical axis of shank 176 by the rotation of rotor 108. Head 174 is still under lip 152 so that no upward movement of shank 176 has taken place and loop 186 is still captured by shank 176 between arms 168, 170. Thus canister 30 is unlatched from container 34 and cable 58 payout from coil 192 occurs until the point at which lanyard 188 is attached to cable 58 is reached whereat further payout is prevented since loop 186 is still captured by shank 176. Lanyard portion 189 may be attached to any point on cable 58 in coil 192 so that the second deployment depth may be varied as desired.

In the third rotative position, Fig. 18, of rotor 108 motor 86 has rotated rotor 108 approximately 90° clockwise from the first rotative position until finger 122 abuts stop 128. End 82 is moved clear of lip 152a and end 116 is moved clear of lip 152 thereby unlatching canister 30 from container 34. During the rotation of rotor 108, head 174 is swung counterclockwise and shank 176 has been rotated counterclockwise about the vertical axis of shank 176 by the rotation of rotor 108, head 174 sliding under lip 152 until it reaches notch 156, Fig. 17, at which time it is spring urged upwardly through notch 156 against bottom 60, with shank 76 moving upwardly under the force of spring 184 a distance sufficient to clear the vertical distance between arm 170 and arm 168 releasing loop end 186, Fig. 10. Full payout of coil 192 occurs, Fig. 13, to obtain the third deployment depth.

Referring to Fig. 19 control circuit 200 is mounted in canister 30 and has interlocking button switches 202, 204 mounted in the wall of canister 30 and manually accessible from outside of canister 30. A display 206 is mounted in the wall of canister 30 and viewable from outside thereof and is coupled to circuit 200 and provided with depth selection information for display. Battery 32 is coupled to circuit 200 to power and initiate its control function and motor 86 is coupled to circuit 200 to receive rotative control signals.

When switch 202 is closed circuit 200 is set for the second deployment depth and when switch 204 is closed circuit 200 is set for the third deployment depth. Display 206 displays the depth selected. When sonobuoy 20 is immersed in salt water, battery 32 is activated and powers circuit 200 and initiates its control function as set by switches 202, 204. If circuit 200 has been set by switch 202, a signal is provided to motor 86 to actuated it in a counterclockwise rotative direction and if circuit 200 was set by switch 204 a signal is provided to motor 86 to actuate it in a clockwise rotative direction. If neither switch 202 nor 204 has been closed to set circuit 200, no actuating signal is provided to motor 86 and it will not rotate in either direction which corresponds to the first deployment depth as explained above.

Although the invention is described in a passive type sonobuoy embodiment, its use is not so limited. It can for example be used in active type sonobuoys as well as air launched buoys other than sonobuoys. This invention can also be used with buoys other than sonobuoys. This invention can also be used with buoys having an air descent control means other than the described parachute and can also be used in buoys having other types of surface float means such as for example an inflatable surface float. In addition, this invention may be actuated by any desired type of driving motor.

Referring to Fig. 20 another system for bidirectional rotation of post 124 and rotor 108 is shown. DC motor 209 which may be a low rpm motor or geared down to a low rpm has -terminal 210, -terminal 211 and rotatably drives a rotatable shaft 212. Motor 209 is mounted similarly to motor 86 so that shaft 212 is connected to and rotatably drives post 124, rotor 108 and limit switch cam 214 which has inwardly formed shoulders 216, 218.

Electrical contacts 220, 222 are at the ends of contact arms 224, 226, respectively which are connected to terminals 228, 230 respectively. Arm 224 is stiff while arm is resilient and is spring loaded so that contact 222 is urged away from contact 220. Arm 226 has cam riding neb 232 that rides the outer surface 234 of cam 214 between shoulders 216, 218 to hold contacts 220, 222 closed. When neb 232 reches either of shoulders 216, 218 contacts 220, 222 open to stop motor 209.

Double pole triple throw switch 236 has ganged switch blades 238, 240 which are pivoted at poles 242, 244 respectively. Blade 238 contacts terminals 246, 248, 250 when blade 240 contacts terminals 252, 254, 256 respectively. Sea water activated battery 258 has its + terminal connected to terminal 230 and its negative terminal connected to pole 242. Pole 244 is connected to terminal 228.

Shaft 212 is shown in its center position corresponding to the Fig. 15 position of rotor 108, blades 238, 240 being preswitched to terminals 248, 254 respectively. When it is desired that rotor 108 be in the position shown in Fig. 18, blades 238, 240 are preswitched to terminals 246, 252, respectively, connecting the negative terminal of battery 258 to negative motor terminal 211 and connecting the positive terminal of battery 258 to positive motor terminal 210 through contacts 220, 222, blade 240 and terminal 252 to impart, after immersion of battery 258, counterclockwise drive to shaft 212 until neb 232 registers with shoulder 218 after approximately 95° of counterclockwise rotation whereat contacts 220, 222 open and motor 209 is stopped. When it is desired that rotor 108 be in the position shown in Fig. 16, blades 238, 240 are preswitched to terminals 250, 256, respectively, connecting the negative terminal of battery 258 to positive motor terminal 210 and connecting the positive terminal of battery 258 to negative motor terminal 211 through contacts 220, 222, blade 240 and terminal 256 to impart, after immersion of battery 258, clockwise drive to shaft 212 until neb 232 registers with shoulder 216 after approximately 95° of clockwise rotation whereat contacts 220, 222 open and motor 209 is stopped.

As mentioned other motors or devices known in the art for imparting the required bidirectional rotation to rotor 108 may be used, the motor or device chosen depending on the particular sonobuoy requirements.

While there have been described above the principles of this invention in connection with specific embodiments, it is to be understood that this is by way of example and is not limiting of the scope of this invention.

**Claims**

1. Variable deployment apparatus for a sonobuoy having a surface component (30), an underwater component (54) and a first means (34) for containing a length of deployment cable (58) coupled between the sonobuoy surface component and the sonobuoy underwater component, characterized in that the apparatus comprises:

second means (108, 152, 152a) for releasably attaching said first means (34) to the surface component (30);

third means (134, 152, 172, 188) for releasably attaching said cable (58) at a point (189) intermediate of said cable length to said first means;

fourth means (108, 174, 184, 172, 156) for selectively actuating said second means to release said first means from the surface component (30) and actuating said third means to release the attachment of said cable (58) from said first means whereby when neither said second means nor said third means is actuated said underwater component (54) will be at a first depth, when said second means is actuated and said third means is not actuated said underwater component (54) will be at a second depth and when said second means and said third means are actuated said underwater component (54) will be at a third depth.

2. The apparatus of claim 1 wherein the surface component comprises a generally cylindrical float canister (30) having an ·axis and a bottom end (60) characterized in that said second means comprises a generally cylindrical container (34) having an axis; a first inwardly extending lip (152a) mounted to the inner surface of and adjacent the upper end of said container, a rotor (108) rotatably mounted to said canister bottom end (60) and rotatable about a rotor axis substantially parallel to said canister axis; a rod (84) pivotably carried at one end by said rotor (108) and at the other end contacting the underside of said lip (152a) when said rotor is in a first rotative position and clear of said lip (152) when said rotor (108) is in a second rotative position; a second inwardly extending lip (152) mounted to the inner side of said container (134) substantially diametrically opposite to said first lip (152a); said rotor (108) having a portion (116) containing the underside of said second lip (152) in said first rotative position and clear of said second lip in said second rotative position whereby when said rotor is in said first rotative position said canister bottom (60) is latched to the upper end of said container (34) and when said rotor (108) is in said second rotative position said canister (30) and container (34) are unlatched and separated for movement apart from one another.

3. The apparatus of claim 2, wherein said third means comprises a bracket (134) mounted to the inside surface of said container (34) depending from said second lip (152); a wire (172) mounted for rotation about its longitudinal axis which is substantially parallel to said container axis at two spaced points (160, 162) in said bracket (134), said points being on the longitudinal wire axis; said wire (172) having a looped head (174); spring means (184) mounted in said bracket (134) for urging said head (174) against the underside of said second lip (152);

said third means further comprising a lanyard (188) attached at a first end to said intermediate point (189) of said cable (58) and looped at a second end (186) about said wire (172) between said two spaced points (162, 164) so that said loop is captured on said wire (172) between said spaced points; a first notch (118) being formed in said rotor (108) for engaging said head (174) and swinging said head about said wire axis and rotating said wire (172) about said wire axis as said rotor (108) is rotated; a second notch (156) being in said second lip (152); said fourth means for rotating said rotor (108) to a third rotative position at which said head (174) is aligned with said second notch (156) whereby said head (174) under said spring force (184) is urged into and through said second notch (156) and said wire (172) is moved from between said two spaced points (162, 164) releasing said lanyard (188) and at which said rotor portion is clear of said second lip (152) and said rod (84) is clear of said first lip (152a) releasing the surface component (30) from said container (34) whereby the surface component and said container become separated and full length deployment of said cable (58) is provided.

4. The apparatus of claim 3 wherein said head (174) becomes aligned with said second notch (156) during rotation of said rotor (108) to said third rotative position.

5. The apparatus of claim 4 wherein said second rotative position is in one rotative direction about said rotor axis from said first rotative position; said third rotative position is in the opposite rotative direction from said one direction from said first rotative position.

6. The apparatus of claim 5 wherein said rotor (108) is wedge shaped and has a narrow end (110) and a wide end (116); said rod one end (82) being pivotally carried by said narrow end (110); said first notch (118) being funnel shaped and formed in said wide end (116); said second notch (156) being V shaped and positioned in said second lip (152) between said first and third rotative positions whereby said head (174) will enter said second notch (156) only upon rotation of said rotor (108) from said first to said third rotative positions.

7. The apparatus of claim 6 wherein said lanyard (188) comprises a tubular woven fabric; said cable (58) being inserted through a portion of said lanyard (188); said lanyard portion fabric progressively contracting in diameter and tightening on said cable (58) as said cable is pulled in a deployment direction through said lanyard portion whereby said lanyard portion is firmly attached to said cable.

8. The apparatus of claim 7 including a rod guide (80) mounted to said canister bottom (60); said guide having a guide hole (80) through which said rod extends for guiding movement of said rod second end (82) and for maintaining said rod in contact with the underside of said first lip (152a).

## Patentansprüche

1. Vorrichtung zum variablen Einsatz für eine Horchboje mit einem Oberflächenteil (30), einem Unterwasserteil (54) und

ersten Mitteln (34) zum Aufbewahren einer bestimmten Länge eines Verbingungskabels (58) zwischen dem Oberflächenteil der Horchboje und dem Unterwasserteil derselben, dadurch gekennzeichnet, dass die Vorrichtung die folgenden Elemente aufweist;

zweite Mittel (108, 152, 152a) zur löslichen Befestigung der genannten ersten Mittel (34) an dem Oberflächenteil (30);

dritte Mittel (134, 152, 172, 188) zur löslichen Befestigung des genannten Kabels (58) an einer Stelle (189) in der Mitte der genannten Kabellänge in bezug auf die genannten ersten Mittel:

vierte Mittel (108, 174, 184, 172, 156) zum selektiven Betätigen der genannten zweiten Mittel zum Freigeben der genannten ersten Mittel von dem Oberflächenteil (30) und zum Betätigen der genannten dritten Mittel zum Freigeben der Befestigung des genannten Kabels (58) von den genannten ersten Mitteln, wodurch, wenn weder die genannten zweiten Mittel noch die genannten dritten Mittel betätigt werden, der genannte Unterwasserteil (54) sich in einer ersten Tiefe befinden wird, und wenn die genannten zweiten Mittel betätigt werden und die genannten dritten Mittel nicht betätigt werden, der genannte Unterwasserteil (54) sich in einer zweiten Tiefe befinden wird und wenn die genannten zweiten Mittel und die genannten dritten Mittel betätigt werden, der genannte Unterwasserteil (54) sich in einer dritten Tiefe befinden wird.

2. Vorrichtung nach Anspruch 1, wobei der Oberflächenteil einen im allgemeinen zylinderförmigen Schwimmkanister (30) mit einer Achse und einem Bodenteil (60) aufweist, dadurch gekennzeichnet, dass die genannten zweiten Mittel die folgenden Elemente aufweisen: einen im allgemeinen zylinderförmigen Behälter (34) mit einer Achse; eine erste sich einwärts erstreckende Zunge (152a), die an der Innenfläche in der Nähe des oberen Endes des genannten Behälters angeordnet ist, einen Läufer (108), der drehbar an dem Bodenteil (60) des genannten Kanisters angeordnet und um eine Läuferachse drehbar ist, die sich im wesentlichen parallel zu der genannten Kanisterachse erstreckt; eine Stange (84), die an einem Ende von dem genannten Läufer (108) drehbar getragen wird und an dem anderen Ende die Unterseite der genannten Zunge (152a) berührt, wenn der genannte Laüfer sich in einer ersten Drehlage befindet und von der genannten Zunge (152) frei liegt, wenn der genannte Läufer (108) sich in einer zweiten Frehlage befindet; eine zweite sich einwärts erstreckende Zunge (152), die an der Innenseite des genannten Behälters (134) im wesentlichen diametral gegenüber der genannten ersten Zunge (152a) angeordnet ist; wobei der genannte Läufer (108) einen Teil (116) aufweist, der die Unterseite der genannten zweiten Zunge (152) in der genannten ersten Drehalage enthält und von der genannten zweiten Zunge frei ist in der genannten zweiten Drehlage, wodurch, wenn der genannte Läufer sich in der genannten ersten Drehlage befindet, der genannte Kanisterboden (60) mit dem oberen Ende des genannten Behälters (34) verbunden ist und wenn der genannte Läufer (108) sich in der genannten zweiten Drehlage befindet, der genannte Kanister (30) und der Behälter (34) zur einzelnen Bewegung entkuppelt und voneiannder getrennt sind.

3. Vorrichtung nach Anspruch 2, dadurch gekennzeichnet, dass die genannten dritten Mittel einen Bügel (134) aufweisen, der an der Innenfläche des genannten Behälters (34) und von der genannten zweiten Zunge (152) herunterhängend angeordnet ist; weiterhin einen Draht (172), der zum Drehen un seine Längsachse an zwei in einem Abstand voneinander liegenden Stellen (160, 162) in dem genannten Bügel (134) angeordnet ist, wobei sich diese Längsachse im wesentlichen parallel zu der genannten Achse des Behälters erstreckt und wobei diese Stellen sich auf der Längsachse des Drahtes befinden; wobei dieser Draht (172) einen schleifenförmigen Kopf (174) hat; weiterhin Federmittel (184), die in dem genannten Bügel (134) angeordnet sind und zwar um den genannten Kopf (174) gegen die Unterseite der genannten zweiten Zunge (152) zu drükken; wobei diese dritten Mittel weiterhin eine Kordel (188) aufweisen, die mit einem ersten Ende an der genannten in der Mitte des genannten Kabels (58) liegenden Stelle (189) befestigt ist und mit einem zweiten Ende (186) in einer Schleife um den genannten Draht (172) zwischen den genannten zwei in einem Abstand voneinander liegenden Stellen (162, 164) geschlungen ist, so dass die genannte Schleife zwischen den genannten zwei Stellen eingeschlossen ist; weiterhin eine erste Nute (118), die in dem genannten Läufer (108) gebildet ist zum Zusammenarbeiten mit dem genannten Kopf (174) und zum Schwingen des genannten Kopfes um die genannte Drahtachse und zum Drehen des genannten Drahtes (172) um die genannte Drahtachse wenn dieser Läufer (108) gedreht wird; und eine zweite Nute (156), die in der genannten zweiten Zunge (152) gebildet ist; weiterhin die genannten vierten Mittel zum Drehen des genannten Läufers (108) in eine dritte Drehungslage, in der der genannte Kopf (174) mit der genannten zweiten Nute (156) fluchtend liegt, wodurch der genannte Kopf (174) unter dem Einfluss der genannten Federkraft (184) in und durch die zweite Nute (156) hindurch gezwungen wird und der genannte Draht (172) von der Stelle zwischen den genannten zwei in einem Abstand voneinander liegenden Stellen (162, 164) bewegt wird und die genannte Kordel (188) freigegeben wird und wobei der genannte Läuferteil von der genannten zweiten Zunge (152) frei ist und die genannte Stange (84) von der genannten ersten Zunge (152a) frei ist, wodurch der Oberflächenteil (30) von dem genannten Behälter (34) freigegeben wird, wodurch der Oberflächenteil und der genannte Behälter voneinander getrennt werden und das genannte Kabel (58) in seiner ganzen länge verwendet werden kann.

4. Vorrichtung nach Anspruch 3, dadurch gekennzeichnet, dass der genannte Kopf (174) während der Drehung des genannten Läufers (108) in die genannte dritte Drehungslage zu der genannten zweiten Nute (156) fluchtend gemacht wird.

5. Vorrichtung nach Anspruch 4, dadurch gekennzeichnet, dass die genannte zweite Drehungslage in der einen Drehrichtung um die genannte Läuferachse aus der genannten ersten Drehungslage liegt; während die genannte dritte Drehungslage in der der genannten einen Richtung entgegengesetzten Drehrichtung aus der genannten ersten Drehrichtung liegt.

6. Vorrichtung nach Anspruch 5, dadurch gekennzeichnet, dass der genannte Läufer (108) keilförmig ist und ein schmales Ende (110) sowie ein breites Ende (116) aufweist; wobei das eine Ende (82) der Stange von dem genannten schmalen Ende (110) drehbar unterstützt wird; wobei die genannte erste Nute (118) trichterförmig und in dem genannten breiten Ende (116) gebildet ist; wobei die zweite Nute (156) V-förmig ausgebildet und in der zweiten Zunge (152) vorgesehen ist und zwar zwischen der genannten ersten und dritten Drehungslage, wodurch der genannte Kopf (174) nur bei Drehung des genannten Läufers (108) aus der genannten ersten in die genannte dritte Drehungslage in die genannte zweite Nute (156) eindringen wird.

7. Vorrichtung nach Anspruch 6, dadurch gekennzeichnet, dass die genannte Kordel (188) ein röhrenförmiges Gewebe aufweist, dass das genannte Kabel (58) durch einen Teil der genannten Kordel (188) hindurch gezogen ist; wobei der genannte Gewebeteil der Kordel auf progressive Weise im Durchmesser abnimmt und sich um das genannte Kabel (58) festzieht, wenn das genannte Kabel durch den genannten Kordelteil in der Gebrauchsrichtung hindurchgezogen wird, wodurch der genannte Kordelteil an dem genannten Kabel befestigt wird.

8. Vorrichtung nach Anspruch 7 mit einer Stangenführung (80), die an dem Boden (60) des genannten Kanisters angeordnet ist, wobei diese Führung eine Führungsloch (80) aufweist, durch das sich die genannte Stange zur Führung der Bewegung des zweiten Endes (82) der genannten Stange und zur Beibehaltung der Berührung der Stange an der Unterseite der genannten ersten Zunge (152a) erstreckt.

**Revendications**

1. Appareil pour le déploiement variable d'une bouée acoustique comportant un élément de surface (30), un élément sous-marin (54), et

un premier dispositif (34) destiné à contenir une longueur de câble de déploiement (58) attachée entre l'élément de surface et l'élément sous-marin de la bouée acoustique, caractérisé en ce qu'il comprend:

un deuxième dispositif (108, 152, 152a) pour attacher le premier dispositif (34) de manière amovible à l'élément de surface (30),

un troisième dispositif (134, 152, 172, 188) pour attacher le câble (58) de façon détachable en un point (189) situé entre les extrémités du câble au premier dispositif,

un quatrième dispositif (108, 174, 184, 172, 156) pour actionner sélectivement le deuxième dispositif en vue de séparer le premier dispositif de l'élément de surface (30) et pour actionner le troisième dispositif en vue de libérer l'attache du câble (58) du premier dispositif, de telle sorte que lorsque ni le deuxième ni le troisième dispositif n'est actionné, l'élélment sous-marin (54) se trouve à une première profondeur, lorsque le deuxième dispositif est actionné et que le troisième ne l'est pas, l'élément sous-marin (54) se trouve à une deuxième profondeur et lorsque le deuxième dispositif et le troisième sont actionnés, l'élément sous-marin (54) se trouve à une troisième profondeur.

2. Appareil suivant la revendication 1, dans lequel l'élément de surface comprend une boîte formant flotteur en substance cylindrique (30) comportant un axe et une extrémité inférieure (60), caractérisé en ce que le deuxième dispositif comprend un récipient dans l'ensemble cylindrique (34) présentant un axe, une première lèvre (152a) s'étendant vers l'intérieur qui est montée sur la surface interne du récipient et près de l'extrémité supérieure de celui-ci, un rotor (108) monté à rotation sur l'extrémité inférieure (60) du flotteur et pouvant tourner autour d'un axe de rotor en substance parallèle à l'axe du flotteur, une tringle (84) supportée à pivot à une extrémité par le rotor (108) et en contact à l'autre extrémité avec le dessous de la lèvre (152a) lorsque le rotor se trouve dans une première position de rotation et étant dégagée de la lèvre (152) lorsque le rotor (108) se trouve dans une seconde position de rotation, une seconde lèvre (152) s'étendant vers l'intérieur montée sur le côté intérieur du récipient (34) en substance en un point diamétralement opposé à la première lèvre (152a), le rotor (108) comportant une partie (116) contenant le dessous de la seconde lèvre (152) dans la première position de rotation et dégagée de la seconde lèvre dans la seconde position de rotation, de sorte que lorsque le rotor se trouve dans la première position de rotation, le fond (60) du flotteur est verrouillé à l'extrémité supérieure du récipient (34) et lorsque le rotor (108) se trouve dans la seconde position de rotation, le flotteur (30) et le récipient (34) sont déverrouillés et séparés en vue de pouvoir s'écarter l'un de l'autre.

3. Appareil suivant la revendication 2, caractérisé en ce que le troisième dispositif comprend une applique (134) montée sur la surface intérieure du récipient (34) suspendue à la seconde lèvre (152), une tige (172) montée à rotation autour de son axe longitudinal qui est en substance parallèle à l'axe du récipient en deux points espacés (160, 162) dans l'applique (134), ces points étant situés sur l'axe longitudinal de la tige, la tige (172) comportant une tête bouclée (174), un ressort (184) monté dans l'applique (134) pour solliciter la tête (174) contre le dessous de la seconde lèvre (152), le troisième dispositif comprenant, en outre, une lanière (188) attachée, à une première extrémité, au point intermédiaire (189) du câble (58) et bouclée, à une seconde extrémité (186), autour de la tige (172) entre les deux points espacés (162, 164), de sorte que la boucle est retenue captive sur la tige (172) entre les points espacés, une première entaille (118) étant ménagée dans le rotor (108) pour attaquer la tête (174) et la faire pivoter autour de l'axe de la tige pour faire tourner la tige (172) autour de cet axe lorsque le rotor (108) est tourné, une deuxième encoche (156) étant prévue dans la seconde lèvre (152), le quatrième dispositif pour faire tourner le rotor (108) vers une troisième position de rotation dans laquelle la tête (174) est en ligne avec la deuxième encoche (156), de sorte que la tête (174), sous la force du ressort (184, est sollicitée dans la deuxième encoche (156) et à travers celle-ci et la tige (172) est déplacée d'entre les deux points espacés (162, 164), libérant la lanière (188), et dans laquelle la dite partie de rotor est dégagée de la seconde lèvre (152) et la tringle (84) est dégagée de la première lèvre (152a) libérant l'élément de surface (30) du récipient (34), de sorte que l'élément de surface et le récipient se séparent et qu'un déploiement de toute la longueur du câble (58) est assuré.

4. Appareil suivant la revendication 3, dans lequel la tête (174) vient en ligne avec la seconde encoche (156) pendant la rotation du rotor (108) vers la troisième position de rotation.

5. Appareil suivant la revendication 4, dans lequel la deuxième position de rotation se situe dans une direction de rotation autour de l'axe du rotor à partir de la première position de rotation, la troisième position de rotation se situant dans la direction de rotation opposée à la précédente à partir de la première position de rotation.

6. Appareil suivant la revendication 5, dans lequel le rotor (108) est cunéiforme et comporte une extrémité étroite (110) et une extrémité large (116), la première extrémité (82) de la tringle étant supportée à pivot par l'extrémité étroite (110), la première encoche (118) étant évasée et ménagée dans l'extrémité large (116), la seconde encoche (156) étant en V et prévue dans la seconde lèvre (152) entre la première et la troisième position de rotation, de sorte quele tête (174) ne pénètre dans la seconde encoche (156) que lors d'une rotation du rotor (108) de la première vers la troisième position de rotation.

7. Appareil suivant la revendication 6, dans lequel la lanière (188) comprend un tissu tissé tubulaire, le câble (58) étant introduit à travers une partie de la lanière (188), le tissu de la dite partie de lanière se contractant progressivement en diamètre et se serrant sur le câble (58) lorsque ce câble est tiré dans une direction de déploiement à travers la dite partie de lanière, de sorte que la partie de lanière est fermenent attachée au câble.

8. Appareil suivant la revendication 7, comprenant un guide de tringle (80) monté sur le fond (60)

17

du flotteur, le guide (80) comportant un trou de guidage traversé par la tringle en vue de guider le mouvement de la seconde extrémité (82) de la

18

tringle et de maintenir cette tringle en contact avec le dessous de la première lèvre (152a).

FIG. 1

FIG. 2

FIG. 3

FIG. 20

**0 145 069**

FIG 4

FIG 5

FIG 6

2

F I G. 7

F I G. 8

F I G. 9

F I G. 10

F I G 11

F I G 12

F I G 13

F I G 14

F I G 15

0 145 069

FIG 16

FIG 17

FIG 18

FIG 19

5